# EUROPEAN PATENT SPECIFICATION

(11) **EP 2 650 107 B1**
(45) Date of publication and mention of the grant of the patent: **14.10.2015**
(21) Application number: 12164086.6
(22) Date of filing: 13.04.2012
(51) Int. Cl.: B29C 70/08, B29C 70/34, B29K 105/10, B29K 309/08, B29L 31/08

(54) **Composite component comprising indicator layers and method for manufacturing it**
Verbundstoffkomponente mit Anzeigeschichten und dessen Herstellungsverfahren
Composant composite comprenant des couches d'indicateur et procédé de fabrication

(43) Date of publication of application: 16.10.2013
(73) Proprietor: Siemens Aktiengesellschaft, 80333 München (DE)
(72) Inventor: Madsen, Kristian Lehmann, 7000 Fredericia (DK)

(56) References cited:
- EP-A1- 2 228 198
- WO-A1-98/29242
- WO-A1-2012/104022
- WO-A2-2012/026980
- US-A- 3 691 000
- US-A1- 2011 315 303
- MIRACLE & S L DONALDSON D B ED - MIRACLE & S L DONALDSON D B: "Composites, Vacuum Infusion", 1 December 2001 (2001-12-01), ASM HANDBOOK - COMPOSITES, ASM INTERNATIONAL, MATERIALS PARK, OHIO ,USA, PAGE(S) 501 - 511, XP002619563, ISBN: 978-0-87170-703-1 * pages 501,502 * * table 2 * * page 509 * * page 511 - page 513 *

## Description

### Field of the Invention

The present invention relates to a method for manufacturing a composite component and to a composite component, for example a wind turbine rotor blade.

### Background Art

In the document WO 2012/104022 A1 a method for producing a semi-finished product for the production of a fibre-reinforced component is described. In Miracle & S L Donaldson D B Ed - Miracle & S L Donaldson D B: "Composites, Vacuum Infusion", 1 December 2001 (2001-12-01), ASM Handbook - Composited, ASM International, Materials Park, Ohio, USA pages 501 - 511, XP002619563, ISBN: 978-0-87170-703-1 the vacuum infusion process comprising the placement of dry reinforcement in a mould and impregnation in a closed mould is described.

A casted composite structure typically comprises layers or mats of fibre glass bonded in resin, for instance epoxy resin. For example, a wind turbine rotor blade comprises such structure. However, such composite structures may be damaged, for example during transport and therefore may require repair. One known method of such composite repair is to abrade the damaged area of glass and resin material and subsequently cast new unbroken glass fibre layers in the abraded area in situ.

Following such abrasion it is quite obvious to see the amount and numbers of glass fibre layers that have been removed, as the layers leave edge-rings in the abraded area, quite similar to annual rings of a tree. Hereby, the number of layers of the abraded area can be counted and replaced.

In composite structures which are casted by use of glass fibre rovings rather than mats, distinct fibre layers are not visible, as the fibres are much more randomized positioned in the composite structure. Consequently, it may be very difficult to observe how much fibre has been removed by the abrasion and how much fibre material, for example fibre rovings, must be replaced during repair.

### Description of the invention

It is therefore an objective of the present invention to provide an advantageous method for manufacturing a composite component and an advantageous composite component.

This objective is solved by a method for manufacturing a composite component as claimed in claim 1 and by a composite component as claimed in claim 11. The depending claims define further developments of the present invention.

The inventive method for manufacturing a composite component comprises the steps of: a) placing fibre rovings in a mould until a particular thickness of fibre roving material is reached, b) placing an indicator layer onto the roving material, c) placing fibre rovings onto the indicator layer until a particular thickness of fibre roving material is reached, d)repeating the steps b) and c) until a predetermined final thickness of fibre roving material is reached, and e) casting the composite component. Preferably the composite component is a wind turbine rotor blade. In other words, a wind turbine rotor blade is manufactured.

The inventive method has the advantage, that in case of damaging the manufactured composite component, due to the indicator layers it is possible to visualize how much fibre material has been removed by abrasion and how much fibre material consequently has to be replaced during repair.

An indicator layer according to the present invention is defined as a layer which is visual distinguishable from the adjacent fibre material, for example the adjacent fibre rovings. The indicator layer has different colour than the adjacent fibre material.

Generally, glass fibre rovings can be used for manufacturing the composite component. Moreover, the composite component can be casted by introducing resin into the mould. Preferably, the composite component is casted by vacuum assisted resin transfer moulding (VARTM).

More specific according to the present invention indicator layers can be introduced when laying out the rovings of the composite structure in the used mould. Hereby, when abrading material from the composite structure, edge-rings like annual rings of a tree will occur in a similar way as if the structure was built of glass fibre mats.

The at least one indicator layer can for instance be placed after a particular number of layers of roving material is placed in the mould. For example, after each n-th a layer of roving material is placed in the mould, wherein n is a natural number, an indicator layer can be placed onto the roving material. For instance, every second or every third or every fourth or every fifth or every sixth etc. layer of roving material is placed in the mould, an indicator layer can be introduced or positioned onto the roving material. This has the advantage, that each indicator layer indicates a particular thickness of abraded material in case of a damaged surface portion.

Furthermore, an indicator layer can be placed by spraying dye onto the fibre roving material in the mould. Furthermore, pre-dyed fibre roving material can be used as indicator layer. In a further variant, at least one sewing thread can be placed as indicator layer together with the fibre rovings in the mould. This has the advantage that the sewing thread can easily be rolled out together with the roving material and can easily be incorporated into the process of building up the fibre material in the mould.

In an even further variant a woven mat of fibre material can be placed as indicator layer onto the fibre rovings. For example, roving mats of glass fibre material can be used.

The inventive composite component comprises fibre roving material. The composite component further comprises a number of indicator layers which are located between layers of roving material. The inventive composite component comprises at least one indicator layer. The indicator layer is visual distinguishable from the adjacent fibre material, for example the adjacent fibre rovings.

The indicator layer has a different colour than the layers of the roving material, which is the rest of the roving material without the indicator layers. A different colour of the indicator layers has the advantage that in case of a damaged surface the depth of the abrasion is easy visible since the indicator layers characterize a particular depth, like edge-rings.

Furthermore, the at least one indicator layer may comprise sewing thread. This has the advantage that the sewing thread can easily be rolled out together with the roving material and can easily be incorporated into the process of building up the fibre material in the mould.

Generally, the inventive composite component can be manufactured by the inventive method as previously described. The inventive composite component can for instance be a wind turbine rotor blade.

The present invention has the advantage that a composite component or structure comprising fibre rovings, for example instead of fibre mats, is provided which can be visually inspected in order to evaluate a level of repair. The visualization can be realised for this composite structure in the same way as for a composite structure which comprises fibre mats. Generally, the invention makes it feasible to observe how much fibre has been removed by abrasion, for example in connection with a repair. Furthermore, the present invention provides a relative simple and cheap method to introduce the said indicator layers into the composite structure of a component.

### Description of embodiments

Further features, properties and advantages of the present invention will become clear from the following description of embodiments in conjunction with the accompanying drawings. The embodiments do not limit the scope of the present invention which is determined by the appended claims. All described features are advantageous as separate features or in any combination with each other.
- Figure 1: schematically shows part of a casted composite structure comprising layers or mats of fibre glass in a sectional and perspective view.
- Figure 2: schematically shows the composite structure of Figure 1 in a sectional and perspective view, wherein some material has been abraded from the upper surface.
- Figure 3: schematically shows a composite structure which is casted by the use of fibre glass rovings in a sectional and perspective view.
- Figure 4: schematically shows part of an inventive composite structure built of glass fibre rovings and comprising indicator layers in a sectional and perspective view.

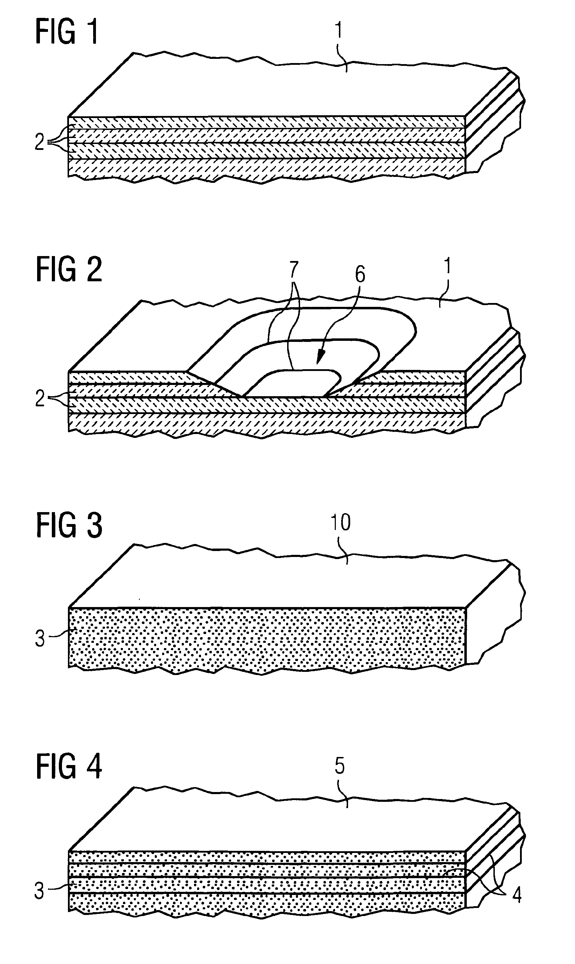

State of the art will be described with reference to Figures 1 to 3. Figure 1 schematically shows part of a casted composite structure. It comprises mats or layers of fibre glass 2. The fibre glass layers 2 are bonded in resin. Such structure can for example be a wind turbine rotor blade. However, such composite structures may be damaged, for example during transport and therefore may require repair. One method of such composite repair is to abrade the damaged area of glass and resin material and subsequently cast new unbroken glass fibre layers in the abraded area in situ.

Figure 2 schematically shows such an abraded area 6 of the surface portion. Following such abrasion it is quite obvious to see the amount and numbers of glass fibre layers that have been removed, as the layers leave edge-rings 7 in the abraded area 6, similar to annular rings of a tree. Hereby, the number of layers 7 of the abraded area 6 can be counted and replaced.

In composite structures which are casted by the use of glass fibre roving instead of mats, distinct fibre layers are not visible, as the fibre are much more randomized positioned in the composite structure. Part of a composite component or composite structure 10 which is casted by the use of glass fibre rovings is schematically shown in Figure 3 in a sectional and perspective view. Because of the random position of the single glass fibre rovings 3 it is very difficult to observe how much fibre has been removed by an abrasion.

The composite component or composite structure 5 according to the present invention will now be described with reference to Figure 4. Figure 4 schematically shows part of a composite component 5 which comprises glass fibre rovings 3 and indicator layers 4. For example, the composite component 5 can be build of glass fibre rovings, for example by vacuum assisted resin transfer moulding.

For example, a particular number of glass fibre rovings 3 can be rolled out in a mould forming a glass fibre roving layer. After a predetermined number of glass fibre roving layers placed in the mould, for example after every third layer of rovings rolled out, an indicator layer 4 is placed onto the uppermost layer of glass fibre rovings or is introduced into the mould. This can for example be realized by spraying dye onto the laid up glass fibre roving material in the mould. In this case the coloured roving material forms the indicator layer.

In another embodiment of the invention the indicator layers 4 are introduced by laying out fibre roving material which is pre-dyed or simply in another colour than the rest of the roving material 3. In an even further embodiment of the invention, the said indicator layers 4 may be one or more sewing threads laid out together with the rovings 3. In another embodiment of the invention the said indicator layer 4 may be a roving mat of glass fibre material that is laid out only for the sake of building up an indication structure.

The present invention provides a very simple method, which allows to observe how much fibre has been removed by abrasion, for example in connection with repairs, in a similar method and construction as it is known from prior art. Moreover, the invention is advantageous in that it is a relative simple and cheap method to introduce the said indicator layers in the composite structure.

## Claims

1. A method for manufacturing a composite component (5) comprising the steps of:
a) placing fibre rovings (3) in a mould until a particular thickness of fibre roving material is reached,
b) placing an indicator layer (4), which has a different colour than the adjacent fibre material, onto the roving material (3) for indicating a particular thickness of abraded material in case of a damaged surface portion of the manufactured composite,
c) placing fibre rovings (3) onto the indicator layer until a particular thickness of fibre roving material is reached,
d) repeating the steps b) and c) until a predetermined final thickness of fibre roving material is reached, and
e) casting the composite component (5).

2. The method as claimed in claim 1,
**characterised in**
manufacturing a wind turbine rotor blade.

3. The method as claimed in claim 1 or claim 2,
**characterised in**
using glass fibre rovings.

4. The method as claimed in any of the claims 1 to 3,
**characterised in**
casting the composite component by introducing resin into the mould.

5. The method as claimed in claim 4,
**characterised in**
casting the composite component by vacuum assisted resin transfer moulding.

6. The method as claimed in any of the claims 1 to 5,
**characterised in**
placing the indicator layer (4) after a particular number of layers of roving material are placed in the mould.

7. The method as claimed in any of the claims 1 to 6,
**characterised in**
placing an indicator layer (4) by spraying dye onto the fibre roving material in the mould.

8. The method as claimed in any of the claims 1 to 7,
**characterised in**
using pre-dyed fibre roving material as indicator layer (4).

9. The method as claimed in any of the claims 1 to 8,
**characterised in**
placing at least one sewing thread as indicator layer (4) together with the fibre rovings (3) in the mould.

10. The method as claimed in any of the claims 1 to 9,
**characterised in**
placing a woven mat of fibre material as indicator layer (4) onto the fibre rovings (3).

11. A composite component (5) comprising fibre roving material,
**characterised in that**
the composite component (5) comprises a number of indicator layers (4), which are located between layers of roving material (3) and which have a different colour than the adjacent fibre material, for indicating a particular thickness of abraded material in case of a damaged surface portion of the manufactured composite.

12. The composite component (5) as claimed in claim 11,
**characterised in that**
the indicator layer (4) comprises sewing thread.

13. A composite component (5) as claimed in any of the claims 11 to 12,
**characterised in that**
it is manufactured by a method as claimed in any of the claims 1 to 10.

14. The composite component (5) as claimed in any of the claims 11 to 13,
**characterised in that**
the composite component (5) is a wind turbine rotor blade.

## Patentansprüche

1. Verfahren zum Herstellen einer Verbundstoffkomponente (5), welches die folgenden Schritte umfasst:
a) Anbringen von Faserrovings (3) in einer Form, bis eine bestimmte Dicke von Faserrovingmaterial erreicht ist,
b) Anbringen einer Anzeigeschicht (4), welche eine andere Farbe als das benachbarte Fasermaterial hat, auf dem Rovingmaterial (3), zum Anzeigen einer bestimmten Dicke von abgetragenem Material im Falle eines beschädigten Oberflächenabschnitts des hergestellten Verbundstoffs,
c) Anbringen von Faserrovings (3) auf der Anzeigeschicht, bis eine bestimmte Dicke von Faserrovingmaterial erreicht ist,
d) Wiederholen der Schritte b) und c), bis eine vorbestimmte endgültige Dicke von Faserrovingmaterial erreicht ist, und
e) Gießen der Verbundstoffkomponente (5).

2. Verfahren nach Anspruch 1,
**gekennzeichnet durch**
Herstellen eines Windenergieanlagen-Rotorblattes.

3. Verfahren nach Anspruch 1 oder Anspruch 2,
**gekennzeichnet durch**
Verwenden von Glasfaserrovings.

4. Verfahren nach einem der Ansprüche 1 bis 3,
**gekennzeichnet durch**
Gießen der Verbundstoffkomponente **durch** Einbringen von Harz in die Form.

5. Verfahren nach Anspruch 4,
**gekennzeichnet durch**
Gießen der Verbundstoffkomponente **durch** vakuumunterstütztes Harzspritzpressen.

6. Verfahren nach einem der Ansprüche 1 bis 5,
**gekennzeichnet durch**
Anbringen der Anzeigeschicht (4), nachdem eine bestimmte Anzahl von Schichten von Rovingmaterial in der Form angebracht wurde.

7. Verfahren nach einem der Ansprüche 1 bis 6,
**gekennzeichnet durch**
Anbringen einer Anzeigeschicht (4) **durch** Spritzen von Farbe auf das Faserrovingmaterial in der Form.

8. Verfahren nach einem der Ansprüche 1 bis 7,
**gekennzeichnet durch**
Verwenden von vorgefärbtem Faserrovingmaterial als Anzeigeschicht (4).

9. Verfahren nach einem der Ansprüche 1 bis 8,
**gekennzeichnet durch**
Anbringen wenigstens eines Nähfadens als Anzeigeschicht (4) zusammen mit den Faserrovings (3) in der Form.

10. Verfahren nach einem der Ansprüche 1 bis 9,
**gekennzeichnet durch**
Anbringen einer gewebten Matte aus Fasermaterial als Anzeigeschicht (4) auf den Faserrovings (3).

11. Verbundstoffkomponente (5), welche Faserrovingmaterial umfasst,
**dadurch gekennzeichnet, dass**
die Verbundstoffkomponente (5) eine Anzahl von Anzeigeschichten (4) umfasst, welche zwischen Schichten von Rovingmaterial (3) angeordnet sind und welche eine andere Farbe als das benachbarte Fasermaterial aufweisen, zum Anzeigen einer bestimmten Dicke von abgetragenem Material im Falle eines beschädigten Oberflächenabschnitts des hergestellten Verbundstoffs.

12. Verbundstoffkomponente (5) nach Anspruch 11,
**dadurch gekennzeichnet, dass**
die Anzeigeschicht (4) Nähfäden umfasst.

13. Verbundstoffkomponente (5) nach einem der Ansprüche 11 bis 12,
**dadurch gekennzeichnet, dass**
sie mittels eines Verfahrens nach einem der Ansprüche 1 bis 10 hergestellt ist.

14. Verbundstoffkomponente (5) nach einem der Ansprüche 11 bis 13,
**dadurch gekennzeichnet, dass**
die Verbundstoffkomponente (5) ein Windenergieanlagen-Rotorblatt ist.

## Revendications

1. Procédé de fabrication d'un composant composite (5), comprenant les étapes consistant à :
a) placer des stratifils de fibres (3) dans un moule, jusqu'à ce qu'une épaisseur particulière de matériau de stratifils de fibres soit atteinte,
b) placer, sur le matériau de stratifils (3), une couche d'indicateur (4) qui a une couleur différente de celle du matériau de fibres adjacent, pour indiquer une épaisseur particulière de matériau usé par frottement, dans le cas d'une partie de surface endommagée du composite fabriqué,
c) placer des stratifils de fibres (3) sur la couche d'indicateur, jusqu'à ce qu'une épaisseur particulière de matériau de stratifils de fibres soit atteinte,
d) répéter les étapes b) et c) jusqu'à ce qu'une épaisseur finale prédéterminée de matériau de stratifils de fibres soit atteinte, et
e) mouler le composant composite (5).

2. Procédé selon la revendication 1, **caractérisé par** la fabrication d'une pale de rotor d'éolienne.

3. Procédé selon la revendication 1 ou la revendication 2, **caractérisé par** l'utilisation de stratifils de fibres de verre.

4. Procédé selon l'une quelconque des revendications 1 à 3, **caractérisé par** le moulage du composant composite, par l'introduction de résine dans le moule.

5. Procédé selon la revendication 4, **caractérisé par** le moulage du composant composite obtenu par moulage par transfert de résine sous vide.

6. Procédé selon l'une quelconque des revendications 1 à 5, **caractérisé par** la mise en place de la couche d'indicateur (4), après qu'un nombre particulier de couches de matériau de stratifils a été placé dans le moule.

7. Procédé selon l'une quelconque des revendications 1 à 6, **caractérisé par** la mise en place d'une couche d'indicateur (4), par pulvérisation d'un colorant sur le matériau de stratifils de fibres contenu dans le moule.

8. Procédé selon l'une quelconque des revendications 1 à 7, **caractérisé par** l'utilisation d'un matériau préteint de stratifils de fibres, comme couche d'indicateur (4).

9. Procédé selon l'une quelconque des revendications 1 à 8, **caractérisé par** la mise en place, dans le moule, d'au moins un fil à coudre, comme couche d'indicateur (4), en même temps que les stratifils de fibres (3).

10. Procédé selon l'une quelconque des revendications 1 à 9, **caractérisé par** la mise en place, sur les stratifils de fibres (3), d'un mat tissé de matériau de fibres, comme couche d'indicateur (4).

11. Composant composite (5) comprenant un matériau de stratifils de fibres, **caractérisé en ce que** le composant composite (5) comprend un nombre de couches d'indicateur (4) qui sont placées entre des couches de matériau de stratifils (3) et qui ont une couleur différente de celle du matériau de fibres adjacent, pour indiquer une épaisseur particulière de matériau usé par frottement, dans le cas d'une partie de surface endommagée du composite fabriqué.

12. Composant composite (5) selon la revendication 11, **caractérisé en ce que** la couche d'indicateur (4) comprend un fil à coudre.

13. Composant composite (5) selon l'une des revendications 11 ou 12, **caractérisé en ce qu'**il est fabriqué par un procédé selon l'une quelconque des revendications 1 à 10.

14. Composant composite (5) selon l'une quelconque des revendications 11 à 13, **caractérisé en ce que** le composant composite (5) est une pale de rotor d'éolienne.
